(19) Europäisches Patentamt
European Patent Office
Office européen des brevets

(11) **EP 4 513 902 A1**

(12) **EUROPEAN PATENT APPLICATION**

(43) Date of publication:
**26.02.2025 Bulletin 2025/09**

(51) International Patent Classification (IPC):
**H04R 25/00** $^{(2006.01)}$

(21) Application number: **24194587.2**

(52) Cooperative Patent Classification (CPC):
**H04R 25/507**; H04R 2225/41

(22) Date of filing: **14.08.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.08.2023 EP 23192671**

(71) Applicant: **Oticon A/S**
**2765 Smørum (DK)**

(72) Inventors:
• **BYSTED, Peter Asbjørn Leer**
**DK-2765 Smørum (DK)**
• **JENSEN, Jesper**
**DK-2765 Smørum (DK)**
• **BRAMSLØW, Lars**
**DK-2765 Smørum (DK)**

(74) Representative: **Demant**
**Demant A/S**
**Kongebakken 9**
**2765 Smørum (DK)**

(54) **IMPROVED HEARING LOSS EMULATION VIA NEURAL NETWORKS**

(57) A method of defining and setting a signal processing of a hearing aid is disclosed. The hearing aid is configured to be worn by a user at or in an ear of the user. The method comprises providing at least one electric input signal representing at least one input sound signal from a sound environment of a hearing aid user, determining a normal-hearing representation of said at least one electric input signal based on a selected normal-hearing auditory model fj, determining optimised training parameters of a neural network, where the neural network represents a hearing-impaired representation of said at least one electric input signal based on a hearing-impaired auditory model, wherein determining the optimised training parameters comprises determining a frequency distribution, $\beta_j$, and a level and frequency distribution, $\alpha_{j,1}$, of said at least one electric input signal based on an equalization of sound pressure levels of said at least one electric input signal. A hearing aid adapted to be worn in or at an ear of a user is furthermore disclosed.

FIG. 2

EP 4 513 902 A1

**Description**

<u>SUMMARY</u>

The present application relates to a method of defining and setting a signal processing of a hearing aid, the hearing aid being configured to be worn by a user at or in an ear of the user.

The present application further relates to a hearing aid adapted to be worn in or at an ear of a user.

The present application further relates to a hearing system comprising left and right hearing aids.

The present application further relates to a computer program comprising instructions which, when the program is executed by a computer, cause the computer to carry out the method.

<u>A method</u>

Some modern hearing aids use in-the-hearing-aid-neural-networks to perform some of the signal processing. As an example, a deep neural network may be implemented to perform part of the noise reduction. Currently, such neural networks are fixed. In other words, the same neural network is given to every hearing aid user and the same neural network is used in all acoustic situations.

However, such neural networks would perform better if they were adapted to the specific hearing aid user and/or acoustic situation. In other words, ideally, a different neural network could be used for different hearing aid users or acoustic situation, e.g., as indicated by user data (e.g., the audiogram), behavioural data, user preferences, etc.

Training a deep neural network to emulate an auditory model is a conventional non-linear regression problem. However, when training deep neural network emulators to simulate auditory models with a dataset spanning a large dynamic input range - which is needed for hearing loss compensation - the emulators will not perform well across a function of input sound level and the frequency channels of the auditory model. This means that the generated hearing loss compensation and denoising strategies will not perform as intended or will only perform as intended for a narrow set of sound input levels and frequencies and will start behaving erratically or unpredictably once the auditory model emulator performs poorly.

Accordingly, the present application provides a new optimization scheme that greatly increases performance across sound input levels and auditory model channels, without increasing the computational load at inference, while still allowing to use the same known model architectures.

In an aspect of the present application, a method of defining and setting a signal processing of a hearing aid is provided.

The hearing aid may be configured to be worn by a user at or in an ear of the user.

The method may comprise providing at least one electric input signal representing at least one input sound signal from a sound environment of a hearing aid user.

The method may comprise determining a normal-hearing representation of said at least one electric input signal based on a selected normal-hearing auditory model $f_j$.

Selected may refer to that the individual who is carrying out (at least part of) the method of defining and setting a signal processing of a hearing aid (such as the fitting of the hearing aid and/or the training of a neural network of the hearing aid) may select a specific auditory model to be applied in the method.

Selecting a specific auditory model to be applied in the method may refer to choosing/selecting an auditory model suitable for a specific mode to be applied by the hearing aid.

The method may comprise determining optimised training parameters of a neural network. The neural network may represent (may be) a hearing-impaired representation of said at least one electric input signal based on a hearing-impaired auditory model.

Determining the optimised training parameters may comprise determining a frequency distribution, $\beta_j$, of said at least one electric input signal.

Determining the optimised training parameters may comprise determining a level and frequency distribution, $\alpha_{j,1}$, of said at least one electric input signal.

Determining a frequency distribution, $\beta_j$, and a level and frequency distribution, $\alpha_{j,1}$, of said at least one electric input signal may be based on an equalization of sound pressure levels of said at least one electric input signal.

Thereby, an optimization scheme with increased performance across sound input levels and auditory model channels is provided.

Determining the optimised training parameters may comprise training the hearing-impaired auditory model on the provided at least one electric input signal, and minimizing a difference between the normal-hearing representation and the hearing-impaired representation, comprising determining a frequency distribution, $\beta_j$, and a level and frequency distribution, $\alpha_{j,1}$, of said at least one electric input signal based on an equalization of sound pressure levels of said at least one electric input signal.

The method may further comprise determining signal processing parameters based on said optimized training parameters.

The equalization of the sound pressure levels has the effect that the relatively lower sound levels will count more and the relatively higher sound levels will count less in the determination of the optimised training parameters. Thereby, the sound levels will be taken more equally into account during said determination, instead of the relatively higher sound levels counting the most.

The frequency distribution, $\beta j$, may be dependent on said normal-hearing auditory model $f_j$, used for determining said normal-hearing representation of said at least one electric input signal.

Thereby, the frequency distribution $\beta j$ will vary depending on the auditory model $f_j$ used to determine said frequency distribution $\beta j$.

The frequency distribution, $\beta_j$, may be determined by

$$\bar{\beta}_{j,l} = \frac{1}{|X_l|} \sum_{x_l \in X_l} \frac{1}{||f_j^\theta(x_l)||_1}$$

$$\beta_j = \frac{1}{|L|} \sum_{l \in L} \frac{\bar{\beta}_{j,l}}{\min_{j \in [1,J]} \bar{\beta}_{j,l}}$$

where L is the maximum sound pressure level of said at least one electric input signal, l is the input sound pressure level, j is the frequency, J is the number of frequency channels, X define the electric input signal space, x is the electric input signal, and θ is the free parameters of said normal-hearing auditory model $f_j$, where $l \le L$ and $j \le J$.

The level and frequency distribution $\alpha_{j,1}$, may be determined by

$$\bar{\alpha}_{j,l} = \frac{1}{\beta_j |X_l|} \sum_{x_l \in X_l} \frac{1}{||f_j^\theta(x_l)||_1}$$

$$\alpha_{j,l} = \frac{J \bar{\alpha}_{j,l}}{\sum_{j=1}^J \bar{\alpha}_{j,l_{\max}}} \ .$$

where l is the input sound pressure level, j is the frequency, J is the number of frequency channels, X define the electric input signal space, x is the electric input signal, and θ is the free parameters of said normal-hearing auditory model $f_j$, where $j \le J$.

The hearing-impaired auditory model may be selected in dependence of a pre-determined audiogram of said user.

The hearing-impaired auditory model may be selected in dependence of an electroencephalography (EEG) of said user.

The hearing-impaired auditory model may be selected in dependence of a distortion product otoacoustic emissions (DPOAE) response of said user.

For example, an audiogram of the hearing aid user may be determined prior to (i.e., at an earlier stage in time) than when defining and setting the signal processing of the hearing aid (e.g., during fitting of the hearing aid).

Thereby, the auditory model best suited for the user taking account of the audiogram of the user may be selected.

The step of determining a normal-hearing representation of said at least one electric input signal based on a selected normal-hearing auditory model, may comprise selecting said normal-hearing auditory model f; from a plurality of normal-hearing auditory models.

A plurality may refer to two or more auditory models.

Each normal-hearing auditory model f; selected from said plurality of normal-hearing auditory models may depend on a specific type of sound environment of the hearing aid user.

Sound environment may refer to a noisy sound environment, such as at a cocktail party or in a factory, or may refer to a low noise sound environment.

Each normal-hearing auditory model f; selected from said plurality of normal-hearing auditory models may depend on a specific type of hearing mode of the hearing aid user.

Hearing mode may refer to a hearing listening mode of the hearing aid (e.g., selected/chosen by the user) such as a music mode.

Optimised training parameters of said neural network may be determined (trained) based on said at least one electric input signal representing said specific sound environment.

The present application provides a method of training a neural network such as a Deep Neural Network (DNN) to simulate the Auditory model. This may be done by training the model across a large dataset of acoustic signals, and then minimize some Optimization Objective, that minimizes the difference between the true auditory model representation, $f(x)$ and the estimated representation $\hat{f}(x)$.

Accordingly, the method further comprises minimizing an Optimization Objective by minimizing a difference between the normal-hearing representation and the hearing-impaired representation.

For example, firstly, a generic notation that may be used for both auditory models may be defined:

Define a signal space $X \subset R^T$ and an inner representation space, $I \subset R^{J \times T^*}$. In this context, T is the length of the input signal, J is the number of frequency channels with a given center frequency (CF), and $T^*$ is the time dimension in the inner representation space. In general, $T = T^*$, but in some cases the inner representation might be down- or up-sampled, meaning $T \neq T^*$. Thus, one can think of the inner representation as a spectrogram-type representation of the input signal. We denote the auditory model, as the function $f^\theta : X \to I$, where $\theta$ is the free parameters of the model. For easier reading, we will suppress the $\theta$ notation, except where it is needed for proper understanding. To emphasize a single CF of the auditory model, we use the notation $f_j$ for the j-th frequency channel of the inner representation. In the following, we will be using $\hat{f}(x)$ as the estimator of $f(x)$.

Conventionally, the Deep Neural Network (DNN) auditory model emulators have been trained using Mean Absolute Error (MAE) or the Mean Squared Error (MSE), as:

$$MAE\left(f(x),\ \hat{f}(x)\right) = \sum_{j=1}^{J} \left\| f_j(x) - \hat{f}_j(x) \right\|_1, \quad (1)$$

$$MSE\left(f(x),\ \hat{f}(x)\right) = \sum_{j=1}^{J} \left\| f_j(x) - \hat{f}_j(x) \right\|_2^2. \quad (2)$$

In the present application the whole dataset T, is defined as consisting of input-output pairs x and $f^\theta(x)$:

$$T := \{(x, f^\theta(x)) \mid x \in X\} \quad (3)$$

And the subset of T, at a given input level SPL of x:

$$T_l := \left\{ (x, f^\theta(x)) \in T \mid p_0 10^{l/20} \right\} \quad (4)$$

Where L is the maximal level, i.e., $l \leq L$. Thus, T is the union (combination) of all $T_l$

$$FPAE\left(f(x),\ \hat{f}(x)\right) = \sum_{j=1}^{J} \left\| \beta_j f_j(x) - \overline{f}_j(x) \right\|_P^P \alpha_{l,j} \quad (5)$$

$$\overline{\beta_J} = \sum_{x \in T} \frac{1}{\left\| f_j(x) \right\|_P^P}, \quad (6)$$

$$\beta_j = \frac{\overline{\beta_J}}{\min_{j \in [1,J]} \overline{\beta_J}} \quad (7)$$

$$\overline{\alpha_{l,j}} = \sum_{x \in T_l} \frac{1}{\left\| f_j(x) \right\|_P^P} \frac{1}{\beta_j}, \quad (8)$$

$$\alpha_j = \frac{J \overline{\alpha_{l,j}}}{\sum_{j=1}^{J} \alpha_{L,j}} \quad (9)$$

Since $\bar{f}_j(x)$ estimates $\beta_j f_j(x)$ it follows that $\dfrac{\bar{f}_j(x)}{\beta_j}$ estimates $f_j(x)$. Thus, we denote $\dfrac{\bar{f}_j(x)}{\beta_j} = \hat{f}_j(x)$ to follow previous notation.

Depending on the phenomenon one wants to capture, one can deduct the mean from $f_j(x)$ in equations 3-8, to only give importance to the variance of the signal in the weighting. This might be important for auditory models using DC-offsets (IHC DC potentials, auditory nerve spontaneous firing etc.)

Equations 6-8 gives a tensor for $\alpha_{l,j}$ and $\beta_j$. Note that "j" denotes the frequency and "l" the input level dependency.

Furthermore, since the levels at which $T_l$ is computed is discretized, one may interpolate in the log-domain between two levels, which helps stabilize the training of the DNN.

To measure the performance of the model, one may introduce a new metric, the Signal to Error Ratio (SER), analogous to the Signal to Noise Ratio. This metric allows to measure the relative performance, and may be computed at a set of input levels for each CF.

Accordingly, the method may comprise determining a Signal to Error Ratio (SER) by

$$SER(j) = \frac{\left\| \| f_j(x) \| \right\|_2}{\left\| \| f_j(x) - \hat{f}_j(x) \| \right\|_2}$$

A Hearing Aid

In an aspect, a hearing aid adapted to be worn in or at an ear of a user is furthermore provided.

The hearing aid may comprise an input unit for receiving an input sound signal from an environment of the hearing aid user.

The input unit may be configured to provide at least one electric input signal representing said input sound signal.

The hearing aid may comprise an output unit for providing at least one set of stimuli perceivable as sound to the user based on processed versions of said at least one electric input signal.

The hearing aid may comprise a selector configured to select one mode of a plurality of sound environment modes.

The hearing aid may comprise a neural network.

Each mode may represent optimised training parameters of the neural network of the hearing aid determined in dependence of a selected specific type of sound environment of the hearing aid user.

Each mode may represent optimised training parameters of the neural network of the hearing aid determined in dependence of a selected specific type of hearing mode of the hearing aid user.

For example, each mode may represent signal processing parameters of the hearing aid, where said signal processing parameter may be determined from optimised training parameters (by a method as described above). For example, for each mode said optimised training parameters may have been trained on electric input signals identifying/representing a selected specific type of sound environment of the hearing aid user. Two or more modes may exist.

The hearing aid may comprise a processing unit connected to said input unit and to said output unit.

The hearing aid may comprise signal processing parameters of the hearing aid to provide processed versions of said at least one electric input signal.

The signal processing parameters may be determined based on said selected optimized training parameters determined according to the method as disclosed above.

The processing unit may comprise a deep neural network providing the optimized training parameters.

The deep neural network may be trained according to the method as disclosed above.

The input unit may further comprise an input transducer, e.g. a microphone, for converting an input sound to an electric input signal. The input unit may comprise a wireless receiver for receiving a wireless signal comprising or representing sound and for providing an electric input signal representing said sound.

The output unit may further comprise an output transducer. The output transducer may comprise a receiver (loudspeaker) for providing the stimulus as an acoustic signal to the user (e.g., in an acoustic (air conduction based) hearing aid).

The output unit may (additionally or alternatively) comprise a transmitter for transmitting sound picked up-by the hearing aid to another device, e.g., a far-end communication partner (e.g., via a network, e.g., in a telephone mode of operation, or in a headset configuration).

The hearing aid may be adapted to provide a frequency dependent gain and/or a level dependent compression and/or a transposition (with or without frequency compression) of one or more frequency ranges to one or more other frequency ranges, e.g., to compensate for a hearing impairment of a user.

Thereby, the processing unit provides processed versions of said at least one electric input signal.

The hearing aid may comprise a memory storing the weights of the neural network of the hearing aid.

The hearing aid may comprise an antenna and transceiver circuitry for establishing a communication link to an auxiliary device.

The communication link may be a wireless link to an entertainment device (e.g., a TV-set), a communication device (e.g., a telephone), a wireless microphone, another hearing aid, a server device (e.g., a cloud server), or a processor unit, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by the antenna and transceiver circuitry of the hearing aid can be of any type. The wireless link may be a link based on near-field communication, e.g., an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g., Bluetooth Low-Energy technology), or Ultra Wide Band (UWB) technology.

The hearing aid, e.g. the input unit, and/or the antenna and transceiver circuitry may comprise a transform unit for converting a time domain signal to a signal in the transform domain (e.g. frequency domain or Laplace domain, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency $f_{min}$ to a maximum frequency $f_{max}$ may comprise a part of the typical human audible frequency range from 20 Hz to 20 kHz, e.g. a part of the range from 20 Hz to 12 kHz. Typically, a sample rate $f_s$ is larger than or equal to twice the maximum frequency $f_{max}$, $f_s \geq 2f_{max}$. A signal of the forward and/or analysis path of the hearing aid may be split into a number NI of frequency bands (e.g. of uniform width), where NI is e.g. larger than 5, such as larger than 10, such as larger than 50, such as larger than 100, such as larger than 500, at least some of which are processed individually. The hearing aid may be adapted to process a signal of the forward and/or analysis path in a number NP of different frequency channels (NP $\leq$ NI). The frequency channels may be uniform or non-uniform in width (e.g. increasing in width with frequency), overlapping or non-overlapping.

The weights of the neural network may be adaptively adjustable weights.

Adaptively adjustable weights may refer to weights or parameters of a neural network that may be updated/adjusted/corrected one or more times.

Adaptively adjustable weights may refer to weights or parameters and bias units of a neural network that may be updated/adjusted/corrected one or more times.

The hearing aid may further comprise a signal-to-noise ratio (SNR) estimator configured to determine SNR in the environment of the hearing aid user.

The hearing aid may further comprise a sound pressure level (SPL) estimator for measuring the level of sound at the input unit.

The SPL estimator or SPL detector may estimate a current level of a signal of the forward path of the hearing aid. The SPL estimator or SPL detector may be configured to decide whether the current level of a signal of the forward path is above or below a given (L-)threshold value. The SPL estimator or SPL detector may operate on the full band signal (time domain). The level detector may operate on band split signals ((time-) frequency domain).

The hearing aid may comprise at least one accelerometer.

The accelerometer may be configured to detect movement of the hearing aid user's facial muscles and/or bones, e.g. due to speech or chewing (e.g. jaw movement), or movement/turning of the hearing aid user's face in e.g. vertical and/or horizontal direction, and to provide a detector signal indicative thereof.

The accelerometer may be configured to detect jaw movements. The hearing aid may be configured to apply the jaw movements as an additional cue for own voice detection.

For example, movements may be detected when the hearing aid user is nodding, e.g. as an indication that the hearing aid user is following and is interested in the sound signal/talk of a conversation partner/speaking partner.

The accelerometer may be configured to detect movements of the hearing aid user following a speech onset (e.g. as determined by a voice detector (VD), voice activity detector (VAD), and/or an own voice detector (OVD)). For example, movements, e.g. of the head, following a speech onset may be an attention cue indicating a sound source of interest.

The hearing aid may comprise a Voice Activity Detector (VAD). The VAD may be configured for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may further comprise one or more different types of physiological sensors for providing a physiological parameter, where the one or more different types of physiological sensors are configured to measure one or more physiological signals, such as electrocardiogram (ECG), photoplethysmogram (PPG), electroencephalography (EEG), electrooculography (EOG), etc., of the user.

Electrode(s) of the one or more different types of physiological sensors may be arranged at an outer surface of the hearing aid. For example, the electrode(s) may be arranged at an outer surface of a behind-the-ear (BTE) part and/or of an in-the-ear (ITE) part of the hearing aid. Thereby, the electrodes come into contact with the skin of the user (either behind the ear or in the ear canal), when the user puts on the hearing aid.

The hearing aid may comprise a plurality (e.g. two or more) of detectors/sensor and/or estimators which may be operated in parallel. For example, two or more of the physiological sensors may be operated simultaneously to increase the reliability of the measured physiological signals.

The hearing aid may comprise a sound scene classifier configured to classify said acoustic environment of the hearing aid user into a number of different sound scene classes.

The hearing aid may comprise a sound scene classifier configured to provide a current sound scene class in dependence of a current representation, e.g. extracted features, of said at least one electric input signal.

The sound scene classifier may be configured to classify the current situation based on input signals from (at least some of) the detectors/sensors/estimators/accelerometer, and possibly other inputs as well. In the present context 'a current situation' may be taken to be defined by one or more of

a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and;
c) the current mode or state of the user (movement, temperature, cognitive load, etc.);
d) the current mode or state of the hearing aid (program selected, time elapsed since last user interaction, etc.) and/or of another device in communication with the hearing aid.

A hearing system

In a further aspect, a hearing system comprising left and right hearing aids as described above is provided.

The left and right hearing aids may be configured to be worn in or at left and right ears, respectively, of said user, and being configured to establish a wired or wireless connection between them allowing data, e.g. audio data, to be exchanged between them, optionally via an intermediate device.

In a further aspect, a hearing system comprising a hearing aid as described above and an auxiliary device is provided,

Each of the hearing aid and the auxiliary device may include an antenna and a transceiver circuitry for establishing a communication link there between, and thereby allowing the exchange of information between the hearing aid and the auxiliary device.

For example, the auxiliary device may e.g. comprise another hearing aid, a remote control, an audio delivery device, a telephone (e.g. a smartphone), an external sensor, a server device, a cloud server, etc.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC) and adapted for selecting and/or combining an appropriate one of the received audio signals (or combination of signals) for transmission to the hearing aid.

It is intended that some or all of the structural features of the hearing aid and hearing system described above, in the 'detailed description of embodiments' or in the claims can be combined with embodiments of the method, when appropriately substituted by a corresponding process and vice versa. Embodiments of the method have the same advantages as the corresponding hearing aid and hearing system.

Use:

In an aspect, use of a hearing aid as described above, in the 'detailed description of embodiments' and in the claims, is moreover provided. Use may be provided in a hearing system comprising one or more hearing aids (e.g. hearing instruments), headsets, ear phones, active ear protection systems, etc., e.g. in handsfree telephone systems, teleconferencing systems (e.g. including a speakerphone), public address systems, karaoke systems, classroom amplification systems, etc.

A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the 'detailed description of embodiments' and in the claims, when said computer program is executed on the data processing system is furthermore provided by the present application.

A computer program:

A computer program (product) comprising instructions which, when the program is executed by a computer, cause the computer to carry out (steps of) the method described above, in the 'detailed description of embodiments' and in the claims is furthermore provided by the present application.

A data processing system:

In an aspect, a data processing system comprising a processor and program code means for causing the processor to perform at least some (such as a majority or all) of the steps of the method described above, in the 'detailed description of embodiments' and in the claims is furthermore provided by the present application.

An APP:

In a further aspect, a non-transitory application, termed an APP, is furthermore provided by the present disclosure. The APP comprises executable instructions configured to be executed on an auxiliary device to implement a user interface for a hearing aid or a hearing system described above in the 'detailed description of embodiments', and in the claims. The APP may be configured to run on a cellular phone, e.g. a smartphone, or on another portable device allowing communication with said hearing aid or said hearing system.

Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears, acoustic signals transferred as mechanical vibrations to the user's inner ears through the bone structure of the user's head and/or through parts of the middle ear as well as electric signals transferred directly or indirectly to the cochlear nerve of the user.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, as an attachable, or entirely or partly implanted, unit, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

FIG. 1 shows an exemplary hearing system according to the present application.

FIG. 2 shows an exemplary overview of the framework.

FIG. 3 shows an exemplary plot of $\alpha_{l,j}$ and $\beta_j$.

FIG. 4 shows an exemplary error measure of speech for the Verhulst auditory model in 3 different conditions.

FIG. 5 shows an exemplary error measure of 4 different audiograms.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

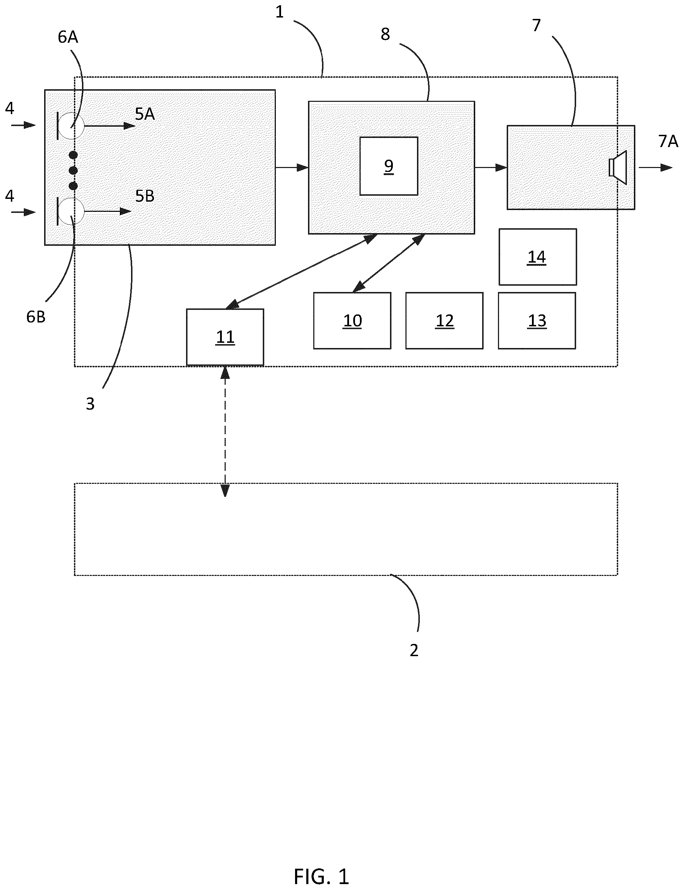

FIG. 1 shows an exemplary hearing system according to the present application.

In FIG. 1, a hearing aid 1 and an auxiliary device 2 are shown. The hearing aid 1 and the auxiliary device may together form a hearing system.

Hearing aid 1 may be adapted to be worn in or at an ear of a hearing aid user.

The auxiliary device 2 may comprise another hearing aid located at the other ear of the hearing aid user. Alternatively, the auxiliary device 2 may comprise a smart phone or a server device.

The hearing aid 1 may comprise an input unit 3 for receiving an input sound signal 4 from an acoustic environment of a hearing aid user and provide at least one electric input signal 5A,5B representing said input sound signal.

In FIG. 1, it is shown that the input unit 3 may also comprise two or more input transducers 6A,6B, e.g. microphones, for converting said input sound signals 4 to said at least one electric input signals 5A,5B.

The hearing aid may comprise an output unit 7 for providing at least one set of stimuli 7A perceivable as sound to the hearing aid user based on processed versions of said at least one electric input signals 5A,5B.

The hearing aid 1 may comprise a processing unit 8 connected to said input unit 3 and to said output unit 7.

The processing unit 8 may comprise a neural network 9, and the processing unit 8 may be configured to determine signal processing parameters of the hearing aid 1 based on weights of the neural network.

Thereby, the processing unit 8 may provide processed versions of said at least one electric input signals 5A,5B.

The hearing aid 1 may comprise a memory 10 storing said weights of the neural network 9 of the hearing aid 1. Accordingly, the memory 10 may both send and receive the presently used weights and/or reference weights.

The hearing aid 1 may comprise an antenna and transceiver circuitry 11 for establishing a communication link to the auxiliary device 2.

The hearing aid 1 may further comprise a selector 14 configured to select one mode of a plurality of sound environment modes, where each mode may represent optimised training parameters of the neural network 9 of the hearing aid 1 determined in dependence of a selected specific type of sound environment or hearing mode of the hearing aid user.

The hearing aid 1 may further comprise a sound scene classifier 12 configured to classify said acoustic environment of the hearing aid user into a number of different sound scene classes.

The hearing aid 1 may further comprise a detector/sensor/estimator 13, such as an SNR estimator, an SPL estimator, at least one physiological sensor, and/or at least one accelerometer.

The auxiliary device 2 may comprise an antenna and transceiver circuitry (not shown) for establishing a communication link between the hearing aid 1 and the auxiliary device 2, and thereby allowing the exchange of information between the hearing aid 1 and the auxiliary device 2.

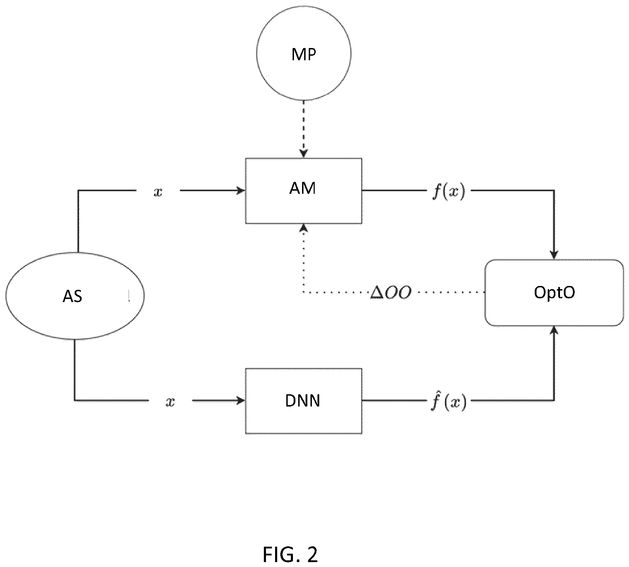

FIG. 2 shows an exemplary overview of the framework.

In FIG. 2, the aim is to train a Deep Neural Network DNN to simulate the Auditory model AM. This may be done by training the auditory model AM across a large dataset of acoustic signals AS, and then minimizing some Optimization Objective OptO, that minimizes the difference between the true auditory model representation $f(x)$ and the estimated representation $\hat{f}(x)$ in the form of the hearing-impaired representation.

Bold lines denote the signal path, dashed lines denote the model parameters MP, and the dotted line denotes the backpropagation $\Delta$OO of the Optimization Objective OptO, which is used to train the Deep Neural Network DNN. x is the electric input signal.

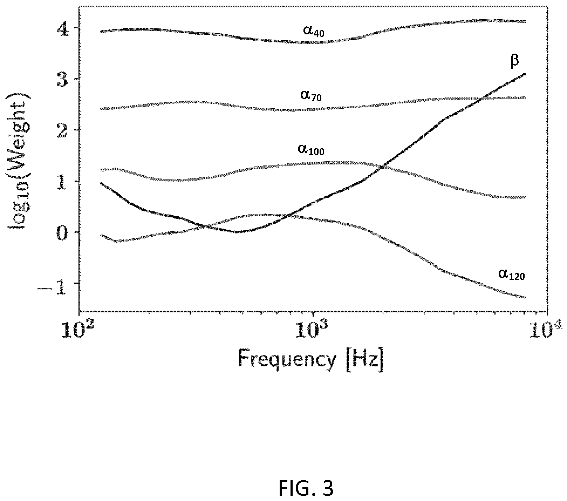

FIG. 3 shows an exemplary plot of $\alpha_{l,j}$ and $\beta_j$.

As identified above, the Equations 6-8 provides a tensor for $\alpha_{l,j}$ and $\beta_j$. Note that "j" denotes the frequency and "l" the input level dependency.

In FIG. 3, it is illustrated how these variables will look like for a N3 hearing loss (moderate, sloping) of the Zilany model [2] where $l \in \{40,70,100,120\}$. Note that the j-dimension (the x-axis) is converted to the CF of the j-th channel.

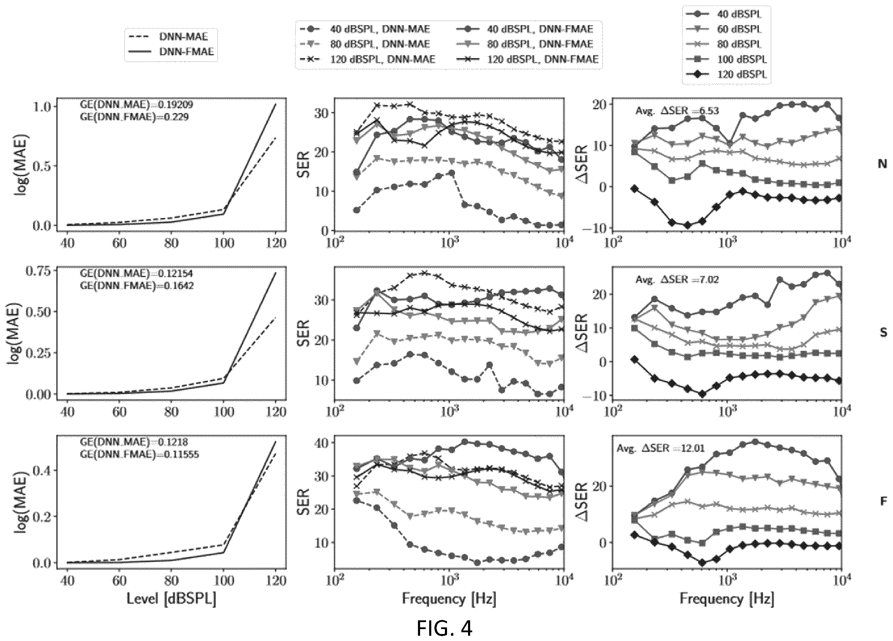

FIG. 4 shows an exemplary error measure of speech for the Verhulst auditory model in 3 different conditions.

The DNN may be trained with the CoNNEar architecture to simulate the Verhulst auditory model [1] and a Wave-U-Net to simulate the Zilany auditory model [2].

For example, 2500 sentences may be used from the LibriTTS dataset to create the input-output pairs for each parameter configuration. The Verhulst auditory model [1] may use the following configurations: Normal, Slope20_5 and Flat20. Normal denotes normal hearing, Slope20_5 a mild, sloping hearing loss, Flat20 a mild, flat hearing loss. The Zilany auditory model [2] may use the following configurations: Normal, N3, N5, and S1. Normal denotes normal hearing, N3 a moderate, sloping hearing loss, N5 a severe, sloping hearing loss, and S1 a steeply sloping hearing loss.

The performance may be measured in three ways. Two neural networks may be trained for each auditory model, one using the MAE as an optimization objective, and another one using a variation of the FPAE in equation 5, called the FMAE - this means we set P=1, i.e. using the 1-norm in equation 3-8. These two networks may be denoted as DNN-MAE and DNN-FMAE respectively.

$$\mathrm{FMAE}(f(x_l), \bar{f}(x_l); \beta_j, \alpha_{j,l}) \overset{\mathrm{def}}{=} \frac{1}{TJ} \sum_{j=1}^{J} ||\beta_j f_j(x_l) - \bar{f}_j(x_l)||_1 \alpha_{j,l}$$

$$(5)$$

Then, the output of 20 sentences is generated at each of 5 different input sound levels, (40,60,80,100,120) dB, using both the DNN's and the reference model, i.e., the ground truth, y(x). Then, the regular MAE at each level, the MAE over this whole training set called the Global Error(GE), the SER and the $\Delta SER$ defined as the difference of the SER between the DNN-FMAE and DNN-MAE may be computed. This is shown in FIGS. 4-5.

From this a large increase for low sound input levels and high frequency components can be seen, even though the global error of the DNN-FMAE tends to be higher (meaning worse performance) for the DNN-MAE.

Accordingly, FIG. 4 shows the error measure of speech for the Verhulst auditory model [1] in 3 different conditions: N(Normal Hearing), Slope20_5 (S), Flat20 (F). DNN-MAE denotes the model trained with the MAE as an optimization objective and DNN-FMAE the model trained with FMAE as an optimization objective. The first column shows the log(MAE) across different levels, and the global MAE (GE): The average MAE across all levels for the DNN-MAE and DNN-FMAE. The second column shows the error in SER across level for the DNN-MAE and DNN-FMAE. The third column shows the difference in SER between DNN-FMAE and DNN-MAE across different levels, and the average increase in SER. Note the different scaling on the plots.

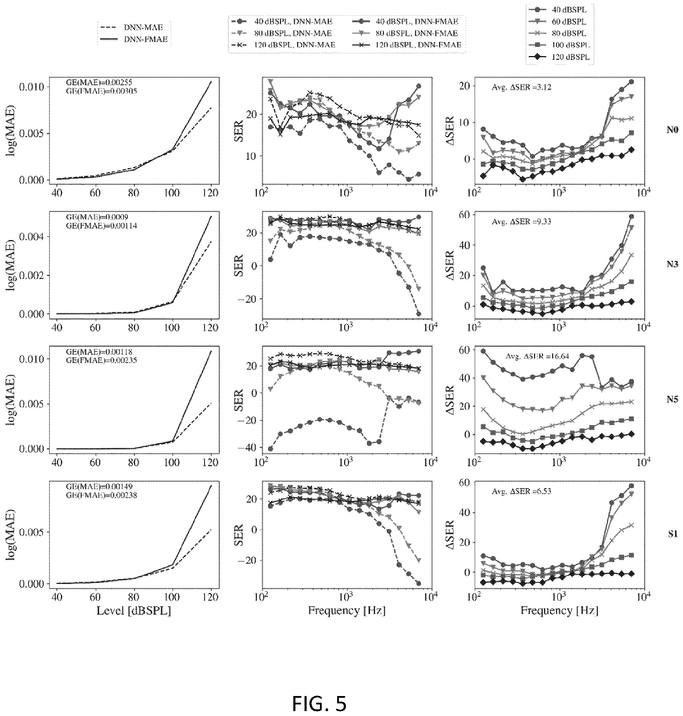

FIG. 5 shows an exemplary error measure of 4 different audiograms.

FIG. 5 shows the error measure of 4 different audiograms, N0(Normal Hearing) and 3 types of hearing loss as measured across 10 sentences not seen during training. DNN-MAE denotes the model trained with the MAE as an optimization objective and DNN-FMAE the model trained with FMAE as an optimization objective. The first column shows the log(MAE) across different levels, and the global MAE (GE): The average MAE across all levels for the DNN-MAE and DNN-FMAE. The second column shows the error in SER across level for the DNN-MAE and DNN-FMAE. The third column shows the difference in SER between DNN-FMAE and DNN-MAE across different levels, and the average increase in SER. Note the different scaling on the plots.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e., to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

REFERENCES

[1] Baby, D., Van Den Broucke, A., & Verhulst, S. (2021). A convolutional neural-network model of human cochlear mechanics and filter tuning for real-time applications. Nature machine intelligence, 3(2), 134-143.
[2] Zilany, M. S., Bruce, I. C., & Carney, L. H. (2014). Updated parameters and expanded simulation options for a model of the auditory periphery. The Journal of the Acoustical Society of America, 135(1), 283-286.

**Claims**

1. Method of defining and setting a signal processing of a hearing aid, the hearing aid being configured to be worn by a user at or in an ear of the user, where the method comprises:

   - providing at least one electric input signal representing at least one input sound signal from a sound environment of a hearing aid user,
   - determining a normal-hearing representation of said at least one electric input signal based on a selected normal-hearing auditory model $f_j$,
   - determining optimised training parameters of a neural network, where the neural network represents a hearing-impaired representation of said at least one electric input signal based on a hearing-impaired auditory model,
   - wherein determining the optimised training parameters comprises
   - training the hearing-impaired auditory model on the provided at least one electric input signal, and minimizing a difference between the normal-hearing representation and the hearing-impaired representation, comprising determining a frequency distribution, $\beta_j$, and a level and frequency distribution, $\alpha_{j,1}$, of said at least one electric input signal based on an equalization of sound pressure levels of said at least one electric input signal,
   - wherein the method further comprises determining signal processing parameters based on said optimized training parameters.

2. Method according to claim 1, wherein said frequency distribution, $\beta_j$, is dependent on said normal-hearing auditory model $f_j$, used for determining said normal-hearing representation of said at least one electric input signal.

3. Method according to any one of the preceding claims, wherein said frequency

   distribution, $\beta_j$, is determined by

   $$\bar{\beta}_{j,l} = \frac{1}{|X_l|} \sum_{x_l \in X_l} \frac{1}{||f_j^\theta(x_l)||_1}$$

   $$\beta_j = \frac{1}{|L|} \sum_{l \in L} \frac{\bar{\beta}_{j,l}}{\min_{j \in [1,J]} \bar{\beta}_{j,l}}$$

   where L is the maximum sound pressure level of said at least one electric input signal, l is the input sound pressure level, j is the frequency, J is the number of frequency channels, X define the electric input signal space, x is the electric input signal, and $\theta$ is the free parameters of said normal-hearing auditory model $f_j$, where $l \leq L$ and $j \leq J$.

4. Method according to any one of the preceding claims, wherein said level and frequency distribution, $\alpha_{j,l}$, is determined by

   $$\bar{\alpha}_{j,l} = \frac{1}{\beta_j |X_l|} \sum_{x_l \in X_l} \frac{1}{||f_j^\theta(x_l)||_1}$$

   $$\alpha_{j,l} = \frac{J \bar{\alpha}_{j,l}}{\sum_{j=1}^J \bar{\alpha}_{j,l_{\max}}} .$$

   where l is the input sound pressure level, j is the frequency, J is the number of frequency channels, X define the electric input signal space, x is the electric input signal, and $\theta$ is the free parameters of said normal-hearing auditory model $f_j$, where $j \leq J$.

5. Method according to any one of the preceding claims, wherein said hearing-impaired auditory model, is selected in dependence of a pre-determined audiogram, or an EEG, or a DPOAE response of said user.

6. Method according to any one of the preceding claims, wherein the step of determining a normal-hearing representation of said at least one electric input signal based on a selected normal-hearing auditory model, comprises selecting said normal-hearing auditory model $f_j$ from a plurality of normal-hearing auditory models.

7. Method according to claim 6, wherein each normal-hearing auditory model f; selected from said plurality of normal-hearing auditory models depends on a specific type of sound environment or hearing mode of the hearing aid user, and where optimised training parameters of said neural network is determined based on said at least one electric input signal representing said specific sound environment.

8. Hearing aid adapted to be worn in or at an ear of a user comprising

- an input unit for receiving an input sound signal from an environment of a hearing aid user and providing at least one electric input signal representing said input sound signal, and
- an output unit for providing at least one set of stimuli perceivable as sound to the user based on processed versions of said at least one electric input signal,
- a processing unit connected to said input unit and to said output unit and comprising signal processing parameters of the hearing aid to provide processed versions of said at least one electric input signal, where said signal processing parameters are determined according to the method of any one of claims 1-7.

9. Hearing aid according to claim 8, wherein the hearing aid further comprises a selector configured to select one mode of a plurality of sound environment modes, where each mode represents optimised training parameters of a neural network of the hearing aid determined in dependence of a selected specific type of sound environment or hearing mode of the hearing aid user.

10. Hearing aid according to claim 8, wherein the processing unit comprises a deep neural network providing the optimized training parameters, the deep neural network being trained according to the method of any one of claims 1-7.

11. Hearing system comprising left and right hearing aids according to any one of claims 8-10, where the left and right hearing aids are configured to be worn in or at left and right ears, respectively, of said user, and being configured to establish a wired or wireless connection between them allowing data, e.g. audio data, to be exchanged between them, optionally via an intermediate device.

12. A computer program comprising instructions which, when the program is executed by a computer, cause the computer to carry out the method of any one of claims 1-7.

FIG. 1

FIG. 2

FIG. 3

FIG. 4

FIG. 5

**Europäisches Patentamt**
**European Patent Office**
**Office européen des brevets**

# EUROPEAN SEARCH REPORT

Application Number

EP 24 19 4587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/242570 A1 (STARKEY LABS INC [US]) 2 December 2021 (2021-12-02) | 8-11 | INV. H04R25/00 |
| A | * paragraph [0019] - paragraph [0055] * | 1-7,12 | |
| A | US 2021/105565 A1 (PEDERSEN MICHAEL SYSKIND [DK] ET AL) 8 April 2021 (2021-04-08) * paragraphs [0006], [0008], [0029], [0036], [0039], [0043], [0072], [0112], [0155]; figure 5 * | 1-12 | |
| X | FOTIOS DRAKOPOULOS ET AL: "A Neural-Network Framework for the Design of Individualised Hearing-Loss Compensation", ARXIV.ORG, CORNELL UNIVERSITY LIBRARY, 201 OLIN LIBRARY CORNELL UNIVERSITY ITHACA, NY 14853, 16 June 2023 (2023-06-16), XP091540971, DOI: 10.1109/TASLP.2023.3282093 * the whole document * | 1-12 | |
| A | BYSTED PETER ASBJ?RN LEER ET AL: "A parameter-conditional neural network framework for modelling parameterized auditory models", EUROREGIO BNAM 2022 JOINT ACOUSTICS CONFERENCE , 9 May 2022 (2022-05-09), pages 307-316, XP093120432, Retrieved from the Internet: URL:https://www.conforg.fr/erbnam2022/outp ut_directory/data/articles/000088.pdf * the whole document * | 1-12 | |

**TECHNICAL FIELDS SEARCHED (IPC)**

H04R

The present search report has been drawn up for all claims

| Place of search | Date of completion of the search | Examiner |
|---|---|---|
| The Hague | 13 December 2024 | Carrière, Olivier |

EPO FORM 1503 03.82 (P04C01)

## ANNEX TO THE EUROPEAN SEARCH REPORT
## ON EUROPEAN PATENT APPLICATION NO.

EP 24 19 4587

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | | Publication date |
|---|---|---|---|---|
| WO 2021242570 A1 | 02-12-2021 | EP | 4158909 A1 | 05-04-2023 |
| | | US | 2023292074 A1 | 14-09-2023 |
| | | WO | 2021242570 A1 | 02-12-2021 |
| US 2021105565 A1 | 08-04-2021 | CN | 112637749 A | 09-04-2021 |
| | | EP | 3806496 A1 | 14-04-2021 |
| | | US | 2021105565 A1 | 08-04-2021 |
| | | US | 2023056617 A1 | 23-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BABY, D.**; **VAN DEN BROUCKE, A.**; **VERHULST, S.** A convolutional neural-network model of human cochlear mechanics and filter tuning for real-time applications. *Nature machine intelligence*, 2021, vol. 3 (2), 134-143

- **ZILANY, M. S.**; **BRUCE, I. C.**; **CARNEY, L. H.** Updated parameters and expanded simulation options for a model of the auditory periphery. *The Journal of the Acoustical Society of America*, 2014, vol. 135 (1), 283-286